# EUROPÄISCHE PATENTSCHRIFT

(11) **EP 0 988 482 B1**
(45) Veröffentlichungstag und Bekanntmachung des Hinweises auf die Patenterteilung: **06.03.2002**
(21) Anmeldenummer: 98922794.7
(22) Anmeldetag: 02.05.1998
(51) Int. Cl.: F16K 31/06

(54) **ELEKTROMAGNETISCHER STELLANTRIEB**
ELECTROMAGNETIC ACTUATOR
SERVOMOTEUR ELECTROMAGNETIQUE

(30) Priorität: 19.06.1997 DE 19725918
(43) Veröffentlichungstag der Anmeldung: 29.03.2000
(73) Patentinhaber: Mannesmann Rexroth AG, 97816 Lohr am Main (DE)
(72) Erfinder: PANZER, Karlheinz, D-97525 Schwebheim (DE); STENGER, Rudolf, D-97854 Steinfeld (DE); VÄTHJUNKER, Reiner, D-97846 Partenstein (DE)
(86) Internationale Anmeldenummer: EP9802608
(87) Internationale Veröffentlichungsnummer: WO9859191

(56) Entgegenhaltungen:
- EP-A- 0 691 464
- WO-A-82/02236
- DE-A- 1 500 104
- DE-C- 3 506 849

## Beschreibung

Die Erfindung betrifft einen elektromagnetischen Stellantrieb gemäß dem Oberbegriff des Anspruchs 1.

Ein derartiger Stellantrieb enthält eine Steuerschaltung, eine Verknüpfungsschaltung sowie ein Leistungsteil. Die Steuerschaltung formt ein Steuersignal in ein zur Ansteuerung des Leistungsteils geeignetes Signal um. Die Verknüpfungsschaltung verknüpft das Ausgangssignal der Steuerschaltung derart mit einem Freigabesignal, daß das Ausgangssignal der Steuerschaltung nur dann an das Leistungsteil weitergeleitet wird, wenn das Freigabesignal vorhanden ist. An das Leistungsteil ist eine Magnetspule über zwei Leitungen angeschlossen. Das Leistungsteil bewirkt bei Ansteuerung einen Stromfluß von einer Betriebsspannung über die Magnetspule zu einem Bezugspotential. Ein im Leistungsteil enthaltenes Stellglied bestimmt entsprechend dem an das Leistungsteil weitergeleiteten Ausgangssignal der Steuerschaltung die Höhe des über die Magnetspule fließenden Stromes. Das Stellglied kann stetig oder getaktet arbeiten. In dem ersten Fall ist die Magnetspule ständig mit einer Spannung beaufschlagt, deren Höhe den über die Magnetspule fließenden Strom bestimmt. In dem zweiten Fall ist der Magnetspule die Betriebsspannung getaktet zugeführt, wobei der Mittelwert des über die Magnetspule fließenden Stromes durch das Tastverhältnis der dem Leistungsteil zugeführten Taktimpulse bestimmt ist. Liegt die Steuerspannung in analoger Form vor, formt die Steuerschaltung die Steuerspannung in Taktimpulse um, deren Tastverhältnis durch die Höhe der Steuerspannung bestimmt ist.

Ein derartiger Stellantrieb, bei dem der Magnetspule die Betriebsspannung getaktet zugeführt ist, ist aus der Druckschrift "Elektrisches Verstärker-Modul zur Ansteuerung von direktgesteuerten Regelventilen mit elektrischer Rückführung - Typ VT 11080, Serie 2X", RD 29 757/04.93 der Mannesmann Rexroth GmbH bekannt. Das in dieser Druckschrift dargestellte Blockschaltbild zeigt einen elektromagnetischen Stellantrieb für ein hydraulisches Regelventil mit zwei Magnetspulen. Jede Magnetspule ist über zwei elektrische Leitungen mit dem Ausgang je eines Leistungsteils des Stellantriebes verbunden. Zwischen dem Ausgang eines PI-Reglers und jedem Leistungsteil ist je eine Steuerschaltung angeordnet. Das Ausgangssignal des PI-Regiers ist den Steuerschaltungen als Steuerspannung zugeführt. Jede Steuerschaltung formt die als Analogsignal vorliegende Steuerspannung in Taktsignale um, die das nachgeschaltete Leistungsteil so ansteuern, daß der Mittelwert des über die Magnetspule fließenden Stromes der Höhe der Steuerspannung entspricht. Zusätzlich besitzen die Steuerschaltungen die Funktion einer Verknüpfungsschaltung. Jeder Steuerschaltung ist zusätzlich zu dem Steuersignal ein Freigabesignal zugeführt. Die Steuerschaltung verknüpft das Freigabesignal derart mit den Taktsignalen, daß den Magnetspulen nur dann die Betriebsspannung zugeführt wird, wenn gleichzeitig das Freigabesignal vorhanden ist. Fehlt das Freigabesignal, wird den Magnetspulen über die jeweils zugeordneten Leistungsteile keine Betriebsspannung zugeführt. Die Verknüpfung der Taktimpulse mit dem Freigabesignal soll dafür sorgen, daß die Magnetspulen nur dann bestromt werden, wenn zusätzlich zu einem von null verschiedenen Steuersignal auch das Freigabesignal vorhanden ist. Die Verknüpfung der Taktsignale mit dem Freigabesignal erhöht die Sicherheit des Stellantriebes, da nur dann eine Bestromung der Magnetspulen erfolgt, wenn zusätzlich zu dem Steuersignal das Freigabesignal vorhanden ist. Bei Anwendungen mit erhöhten Sicherheitsanforderungen, wie z. B. hydraulisch betätigten Pressen, reicht diese Maßnahme jedoch nicht aus, da nicht ausgeschlossen werden kann, daß auch bei fehlendem Freigabesignal den Magnetspulen noch Spannung zugeführt wird. Dies ist z. B. bei einem Kurzschluß zwischen der Betriebsspannung und den zu den Magnetspulen führenden Leitungen der Fall. Eine derartige Fehlfunktion tritt auch dann auf, wenn ein betriebsspannungsseitiger elektronischer Schalter eines Leistungsteils, z. B. nach einer Überlastung nicht mehr den sperrenden Zustand einnimmt. Derartige Fehlfunktionen können nicht nur bei Stellantrieben mit getaktet arbeitenden Stellgliedern auftreten sondern auch bei Stellantrieben mit stetig arbeitenden Stellgliedern.

Der Erfindung liegt die Aufgabe zugrunde, einen Stellantrieb der eingangs genannten Art zu schaffen, der eine Überwachung der Wirksamkeit der Verknüpfung des Ausgangssignals der dem Leistungsteil vorgeschalteten Steuerschaltung mit dem Freigabesignal bezüglich des Stromflusses über die Magnetspule erlaubt.

Diese Aufgabe wird durch die im Anspruch 1 gekennzeichneten Merkmale gelöst. Die Auswertungsschaltung erzeugt ein Schaltsignal, das einen ersten Wert annimmt, solange über die Magnetspule Strom fließt, und einen zweiten Wert annimmt, wenn praktisch kein Strom über die Magnetspule fließt. Die Bildung dieses Signals erfolgt unabhängig von der Bildung eines für eine Regelung der Höhe des über die Magnetspule fließenden Stromes vorgesehenen Stromistwertsignals. Solange beim Abschalten des Freigabesignals ein Wechsel des Ausgangssignals der Auswertungsschaltung von dem ersten Wert zu dem zweiten Wert stattfindet, ist die Verknüpfung von Steuersignal und Freigabesignal wirksam. Nimmt dagegen das Ausgangssignal der Auswertungsschaltung den ersten Wert an, ohne daß das Freigabesignal vorhanden ist, liegt ein Fehlerfall vor.

Vorteilhafte Weiterbildungen der Erfindung sind in den Unteransprüchen gekennzeichnet. Die Diode zwischen dem Eingang der Auswertungsschaltung und dem Eingang des Schwellenwertschalters entkoppelt die Eingangsspannung des Schwellenwertschalters von der Spannung der zu der Magnetspule führenden Leitung. Der Kondensator sorgt dafür, daß die Eingangsspannung des Schwellenwertschalters während der Impulspausen bei getakteter Ansteuerung des Stellgliedes nicht unter die Schwellenspannung des Schwellenwertschalters absinkt. Der Widerstand sorgt nach der Beendung der Ansteuerung des Leistungsteils für eine Entladung des Kondensators. Werden der Auswertungsschaltung die Spannungen der beiden zu der Magnetspule führenden Leitungen zugeführt, verringert sich der Glättungsaufwand für die Eingangsspannung des Schwellenwertschalters. Außerdem läßt sich der Nulldurchgang des über die Magnetspule fließenden Stromes exakter erfassen. Ist die Abklingzeitkonstante der Eingangsspannung des Schwellenwertschalters größer als die Abklingzeitkonstante des über die Magnetspule fließenden Stromes, unterschreitet die dem Schwellenwertschalter zugeführte Spannung die Schwellenspannung des Schwellenwertschalters erst dann, wenn der über die Magnetspule fließende Strom zu null geworden ist. Da in der Flußphase des über die Magnetspule fließenden Stromes auch über den Widerstand der Auswertungsschaltung Strom fließt, verringert ein gegenüber dem Widerstand der Magnetspule hochohmiger Widerstand den Strombedarf des Stellantriebes. Wird die Auswertungsschaltung mit weiteren Eingängen versehen, ist es möglich, bei Stellantrieben mit zwei Magnetspulen mit nur einer Auswertungsschaltung die Spannungen der zu den Magnetspulen führenden Leitungen zu überwachen.

Die Erfindung wird im folgenden mit ihren weiteren Einzelheiten anhand von in den Zeichnungen dargestellten Ausführungsbeispielen näher erläutert. Es zeigen
- Figur 1: das Schaltbild eines Stellantriebes gemäß der Erfindung mit einem stetig arbeitenden Stellglied im Leistungsteil in schematischer Darstellung,
- Figur 2: das Schaltbild eines Stellantriebes gemäß der Erfindung mit einem getaktet arbeitenden Stellglied im Leistungsteil in schematischer Darstellung,
- Figur 3: den zeitlichen Verlauf einzelner Signale des Stellantriebes gemäß der Figur 2,
- Figur 4: das Schaltbild eines Stellantriebes gemäß der Erfindung mit zwei getaktet arbeitenden Stellgliedern im Leistungsteil in schematischer Darstellung,
- Figur 5: den zeitlichen Verlauf einzelner Signale des Stellantriebes gemäß der Figur 4 und
- Figur 6: das Schaltbild von zwei Stellantrieben gemäß der Erfindung mit einer beiden Stellantrieben gemeinsamen Auswertungsschaltung in schematischer Darstellung.

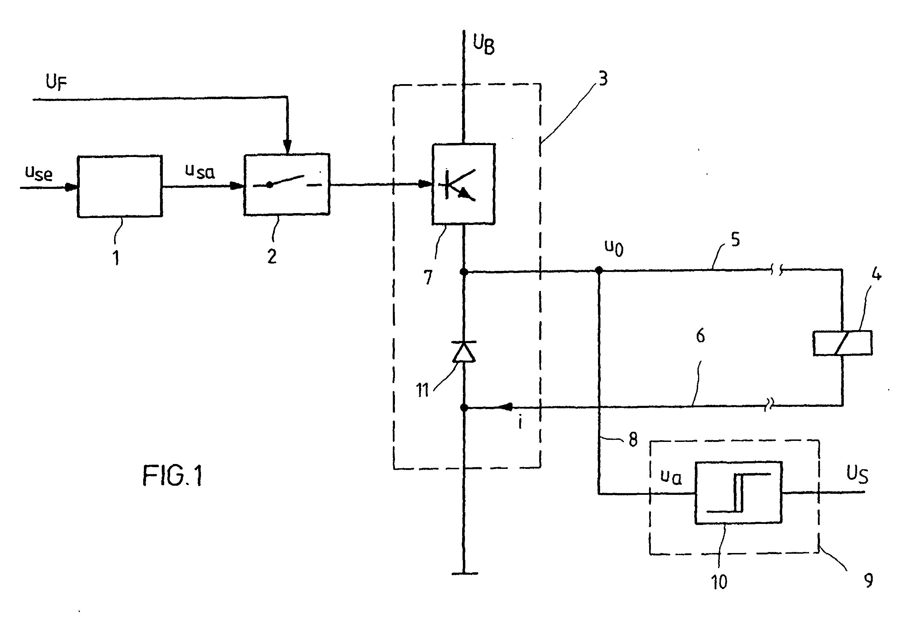

Die Figur 1 zeigt das Schaltbild eines ersten Stellantriebes gemäß der Erfindung in schematischer Darstellung. Einer Steuerschaltung 1 sind eine Verknüpfungsschaltung 2 und ein Leistungsteil 3 nachgeschaltet. Die Steuerschaltung 1 formt eine als Analogsignal vorliegende Spannung uₛₑ in eine Spannung uₛₐ um. Die Spannung uₛₐ ist das Ausgangssignal der Steuerschaltung 1. Bei diesem Signal handelt es sich wie bei der Spannung uₛₑ um ein Analogsignal. Die Verknüpfungsschaltung 2 ist als elektronischer Schalter ausgebildet. Sie leitet die Spannung uₛₐ nur dann an das Leistungsteil 3 weiter, wenn ein Freigabesignal U_{F} vorhanden ist. Ist das Freigabesignal U_{F} nicht vorhanden, erfolgt keine Ansteuerung des Leistungsteils 3. Eine Magnetspule 4, z. B. die Magnetspule eines elektro-hydraulischen Proportionalventils, ist über zwei Leitungen 5 und 6 mit dem Ausgang des Leistungsteils 3 verbunden. Das Leistungsteil 3 enthält ein stetig arbeitendes Stellglied 7, z. B. einen Transistor. Bei einer Ansteuerung des Stellgliedes 7fließt von einer Betriebsspannung U_{B} über das Stellglied 7, die Leitung 5, die Magnetspule 4 und die Leitung 6 ein Strom i zu einem Bezugspotential. Die über die Verknüpfungsschaltung 2 an das Stellglied 7 weitergeleitete Spannung uₛₐ bestimmt die Höhe des über die Magnetspule 4 fließenden Stromes i. Zwischen den Leitungen 5 und 6 ist eine als Freilaufdiode dienende Diode 11 angeordnet. In dem in der Figur 1 dargestellten Schaltbild ist die Leitung 6 ständig mit dem Bezugspotential verbunden. Die Spannung der Leitung 5 ist mit uₒ bezeichnet. Sie stellt sich entsprechend der Ansteuerung des Stellgliedes 7 des Leistungsteils 3 ein. Fließt kein Strom über die Magnetspule 4, liegt die Leitung 5 auf Bezugspotential. Die Spannung uₒ der Leitung 5 ist dann null. Solange von der Betriebsspannung U_{B} ein Strom i über die Magnetspule 4 zum Bezugspotential fließt, ist die Spannung uₒ größer als null. Beim Sperren des Stellgliedes 7 verringert sich die Spannung uₒ und wird kleiner als null. Hat die Spannung uₒ die Flußspannung der Diode 11 erreicht, klingt der über die Magnetspule 4 fließende Strom i ab. Die Spannung uₒ wird dabei auf die Flußspannung der Diode 11 begrenzt. Solange über die Diode 11 Strom fließt, ist die Spannung uₒ auf der Leitung 5 um die Flußspannung der Diode 11 kleiner als das Bezugspotential. Ist der über die Diode 11 fließende Strom abgeklungen, liegt die Leitung 5 auf Bezugspotential.

Eine Leitung 8 verbindet die Leitung 5 mit einer Auswertungsschaltung 9. Die Auswertungsschaltung 9 enthält einen Schwellenwertschalter 10. Die dem Schwellenwertschalter 10 zugeführte Spannung ist mit uₐ bezeichnet. In dem in der Figur 1 dargestellten Schaltbild ist die Spannung uₐ mit der Spannung uₒ identisch. Das Ausgangssignal des Schwellenwertschalters 10 ist ein Schaltsignal U_{S}. Das Schaltsignal U_{S} ist gleichzeitig das Ausgangssignal der Auswertungsschaltung 9. Das Schaltsignal U_{S} ist vorhanden, wenn die Spannung uₐ größer als eine Schwellenspannung Uₐ₀ ist. Ist die Spannung uₐ dagegen kleiner als die Schwellenspannung Uₐ₀, ist das Schaltsignal U_{S} nicht vorhanden. Die Schwellenspannung Uₐ₀ ist so gewählt, daß sie nur geringfügig größer als das Bezugspotential ist. Das Schaltsignal U_{S} ist immer dann vorhanden, wenn von der Betriebsspannung U_{B} über die Magnetspule 4 Strom zum Bezugspotential fließt. Das Schaltsignal U_{S} ist nicht vorhanden, wenn die Spannung uₒ kleiner als die Schwellenspannung Uₐ₀ ist. Dies ist dann der Fall, wenn der über die Magnetspule 4 fließende Strom nach dem Sperren des Stellgliedes 7 über die Diode 11 auf null abklingt und wenn der über die Magnetspule 4 fließende Strom vollständig abgeklungen ist.

Im folgenden ist einem vorhandenen Freigabesignal U_{F} oder Schaltsignal U_{S} der logische Wert "1" zugeordnet. Ist das Freigabesignal U_{F} oder das Schaltsignal U_{S} nicht vorhanden, ist ihm der logische Wert "0" zugeordnet. Bei ordnungsgemäßer Funktion des Stellantriebes ändert sich das Schaltsignal U_{S} von "1" nach "0", wenn das Freigabesignal U_{F} von "1" nach "0" wechselt. Solange diese Wechsel erfolgen, ist die Verknüpfung der Spannung uₛₐ mit dem Freigabesignal U_{F} durch die Verknüpfungsschaltung 2 wirksam. Behält das Schaltsignal U_{S} dagegen den logischen Wert "1" bei, wenn das Freigabesignal U_{F} von "1" nach "0" wechselt, liegt eine Störung vor. Da das Schaltsignal U_{S} den logischen Wert "1" annimmt, wenn die Spannung uₐ größer als die Schwellenspannung Uₐ₀ ist, ist damit auch die Spannung uₒ der Leitung 5 größer als das Bezugspotential. Dies bedeutet, daß über die Magnetspule 4 Strom zum Bezugspotential fließt, obwohl das Freigabesignal U_{F} nicht mehr ansteht. Eine derartige Störung tritt z. B. bei einem Kurzschluß zwischen der Betriebsspannung U_{B} und der Leitung 5 auf. Hierzu gehört auch ein Kurzschluß des Stellgliedes 7 nach einer Überlastung. Auch bei einem Kurzschluß zwischen dem Eingang und dem Ausgang der Verknüpfungsschaltung 2 kann eine derartige Störung auftreten. Eine Berücksichtigung der Zeit, die der durch die Magnetspule 4 fließende Strom nach dem Sperren des Stellgliedes 7 zum Abklingen auf null benötigt, läßt sich durch ein in der Figur 1 nicht dargestelltes Zeitglied, das den Wechsel des Schaltsignals U_{S} insbesondere von "1" nach "0" entsprechend verzögert, erreichen.

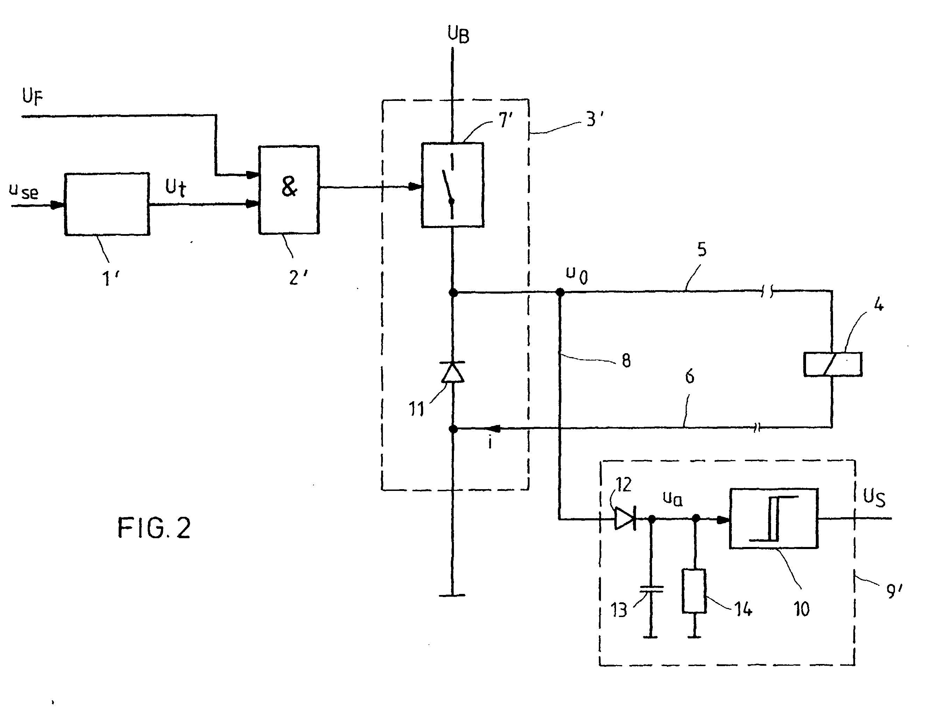

Die Figur 2 zeigt das Schaltbild eines erfindungsgemäßen Stellantriebes mit einem getaktet arbeitenden Stellglied im Leistungsteil. Eine Steuerschaltung 1' formt die als Analogsignal vorliegende Spannung uₛₑ in ein getaktetes Signal Uₜ um, dessen Tastverhältnis der Höhe der Spannung uₛₑ entspricht. Als Tastverhältnis ist hierbei die Einschaltzeit bezogen auf die Summe aus der Einschaltzeit und der auf diese folgenden Ausschaltzeit bezeichnet. Dem getakteten Signal Uₜ sind wie dem Freigabesignal U_{F} und dem Schaltsignal U_{S} die logischen Werte "0" und "1" zugeordnet. Eine als UND-Gatter wirkende Verknüpfungsschaltung 2' leitet das getaktete Signal Uₜ nur dann an ein Leistungsteil 3' weiter, wenn das getaktete Signal Uₜ und das Freigabesignal U_{F} gleichzeitig den logischen Wert "1" aufweisen. Ist das Freigabesignal U_{F} nicht vorhanden, erfolgt keine Ansteuerung des Leistungsteils 3'. Das Leistungsteil 3' enthält ein getaktet arbeitendes Stellglied 7', z. B. einen als elektronischer Schalter dienenden MOS-Feldeffekttransistor. Bei leitendem Stellglied 7' fließt von der Betriebsspannung U_{B} über das Stellglied 7', die Leitung 5, die Magnetspule 4 und die Leitung 6 ein Strom i zum Bezugspotential. Zwischen den Leitungen 5 und 6 ist eine Diode 11 angeordnet. Sie dient bei nicht leitendem Stellglied 7' als Freilaufdiode für den über die Magnetspule 4 fließenden Strom i. Der zeitliche Mittelwert des über die Magnetspule 4 fließenden Stromes i ist bei konstanter Betriebsspannung U_{B} proportional zu dem Tastverhältnis des getakteten Signals Uₜ.

Die Leitung 5 ist über die Leitung 8 mit einer Auswertungsschaltung 9' verbunden. Die Auswertungsschaltung 9' enthält wie die Auswertungsschaltung 9 in der Figur 1 einen Schwellenwertschalter 10. Die Spannung uₒ auf der Leitung 5 ist dem Schwellenwertschalter 10 über eine Diode 12 zugeführt. Zwischen dem Eingang des Schwellenwertschalters 10 und dem Bezugspotential ist die Parallelschaltung eines Kondensators 13 und eines Widerstandes 14 angeordnet. Die Diode 12 entkoppelt die dem Eingang des Schwellenwertschalters 10 zugeführte Spannung uₐ von der Spannung uₒ. Der Kondensator 13 glättet die Spannung uₐ, der Widerstand 14 dient als Ableitwiderstand. Wie oben anhand der Figur 1 beschrieben, nimmt das Schaltsignal U_{S} den logischen Wert "1" an, wenn die Spannung uₐ größer als die Schwellenspannung Uₐ₀ ist. Ist die Spannung uₐ kleiner als die Schwellenspannung Uₐ₀, nimmt das Schaltsignal U_{S} den logischen Wert "0" an.

In der Flußphase, d. h. bei leitendem Stellglied 7', fließt Strom von der Betriebsspannung U_{B} über das Stellglied 7', die Leitung 5, die Magnetspule 4 und die Leitung 6 zum Bezugspotential. Die Spannung uₒ auf der Leitung 5 ist in dieser Phase praktisch gleich der Betriebsspannung U_{B}. In der Sperrphase, d. h. bei nicht leitendem Stellglied 7', fließt der Strom zunächst in gleicher Höhe über die Diode 11 weiter und verringert sich dann nach einer e-Funktion, deren Zeitkonstante im wesentlichen durch die Induktivität der Magnetspule und den ohmschen Widerstand der Magnetspule 4 sowie der Leitungen 5 und 6 bestimmt ist.

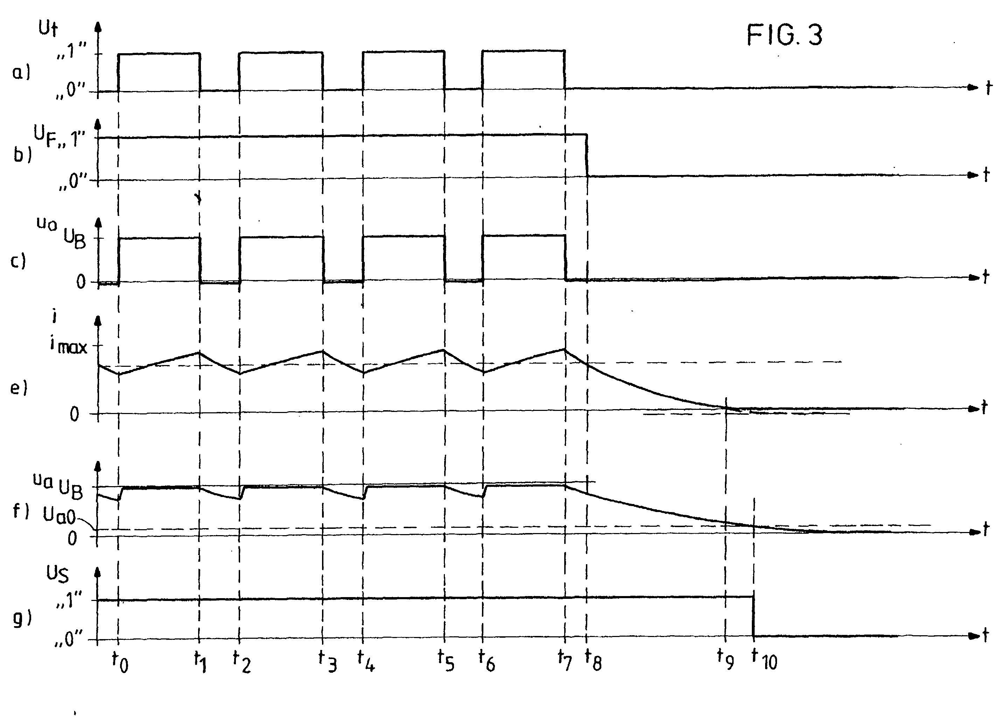

Die Figur 3 zeigt in mehreren untereinander angeordneten Diagrammen den zeitlichen Verlauf ausgewählter Signale des Stellantriebes gemäß der Figur 2. Dabei zeigt
- Figur 3a: das getaktete Signal Uₜ mit den logischen Werten "0" und "1",
- Figur 3b: das Freigabesignal U_{F} mit den logischen Werten "0" und "1",
- Figur 3c: die Spannung uₒ auf der Leitung 5 in dem Bereich zwischen null und der Betriebsspannung U_{B},
- Figur 3e: den über die Magnetspule 4 fließenden Strom i zwischen null und dem sich bei einem Tastverhältnis von 100 % einstellenden maximalen Strom iₘₐₓ,
- Figur 3f: die Spannung uₐ am Eingang des Schwellenwertschalters 10 zwischen null und der Betriebsspannung U_{B} sowie
- Figur 3g: das Schaltsignal U_{S} mit den logischen Werten "0" und "1".

Das Freigabesignal U_{F} (Figur 3b) weist bis zum Zeitpunkt t₈ den logischen Wert "1" auf. In diesem Zeitraum wird die Magnetspule 4 entsprechend dem getakteten Signal Uₜ (Figur 3a) mit der Betriebsspannung U_{B} beaufschlagt. Der zeitliche Verlauf der Spannung uₒ auf der Leitung 5 (Figur 3c) entspricht dabei dem zeitlichen Verlauf des getakteten Signals Uₜ. Der Strom i (Figur 3e) steigt jeweils in den Flußphasen, d. h. in den Zeiträumen t₀ bis t₁, t₂ bis t₃, t₄ bis t₅ und t₆ bis t₇, nach einer e-Funktion an. In den Sperrphasen, d. h. in den Zeiträumen t₁ bis t₂, t₃ bis t₄, t₅ bis t₆ sowie ab dem Zeitpunkt t₇, klingt der Strom i nach einer e-Funktion ab. Im Zeitpunkt t₉ ist der Strom i zu null geworden. In den Flußphasen ist die dem Eingang des Schwellenwertschalters 10 zugeführte Spannung uₐ (Figur 3f) nach einem kurzzeitigen Ladevorgang des Kondensators 13 gleich der um die Durchlaßspannung der Diode 12 verminderten Spannung uₒ. In den Sperrphasen entlädt sich der Kondensator 13 über den Widerstand 14 nach einer e-Funktion. Die Zeitkonstante dieser e-Funktion ist durch das Produkt aus dem Widerstandswert des Widerstandes 14 und der Kapazität des Kondensators 13 bestimmt. Es ist vorteilhaft, diese Zeitkonstante größer zu wählen als die Zeitkonstante, mit der der in der Sperrphase über die Magnetspule 4 fließende Strom i abklingt. Bei dieser Dimensionierung der Zeitkonstanten ist der Strom i bereits zu null geworden, wenn die Spannung uₐ im Zeitpunkt t₁₀ die Schwellenspannung Uₐ₀ unterschreitet. In diesem Zeitpunkt ändert sich das Schaltsignal U_{S} (Figur 3g) von dem logischen Wert "1" zu dem logischen Wert "0".

Bei ordnungsgemäßer Funktion des Stellantriebes ändert sich der logische Wert des Schaltsignals U_{S} von "1" nach "0", nachdem das Freigabesignal U_{F} - wie anhand der Figur 3 beschrieben - von "1" nach "0" gewechselt hat. Der Wechsel des Schaltsignals U_{S} von "1" nach "0" folgt dem Wechsel des Freigabesignals U_{F} von "1" nach "0" mit einer durch den Zeitraum t₁₀ - t₈ bestimmten Verzögerung. Solange ein derartiger Wechsel erfolgt, ist die Verknüpfung des getakteten Signals Uₜ mit dem Freigabesignal U_{F} durch die Verknüpfungsschaltung 2' wirksam. Behält das Schaltsignal U_{S} dagegen den logischen Wert "1" bei, wenn das Freigabesignal U_{F} von "1" auf "0" gewechselt hat, liegt eine Störung vor. Da das Schaltsignal U_{S} den logischen Wert "1" annimmt, wenn die Spannung uₐ größer als die Schwellenspannung Uₐ₀ ist, ist damit auch die Spannung uₒ der Leitung 5 größer als das Bezugspotential. Dies bedeutet, daß über die Magnetspule 4 Strom fließt, obwohl das Freigabesignal U_{F} nicht mehr ansteht. Eine derartige Störung tritt z. B. bei einem Kurzschluß zwischen der Betriebsspannung U_{B} und der Leitung 5 auf. Hierzu gehört auch ein Kurzschluß des Stellgliedes 7' nach einer Überlastung. Auch bei einem Kurzschluß zwischen dem Eingang und dem Ausgang der Verknüpfungsschaltung 2' kann eine derartige Störung auftreten. Die vorstehend in allgemeiner Form beschriebene Auswertung des Schaltsignals U_{S} in Abhängigkeit von dem Freigabesignal U_{F} läßt sich durch in entsprechender Weise miteinander verbundene logische Verknüpfungsglieder automatisieren, so daß im Störungsfall entweder eine Abschaltung erfolgt oder zunächst nur eine Störungssignalisierung.

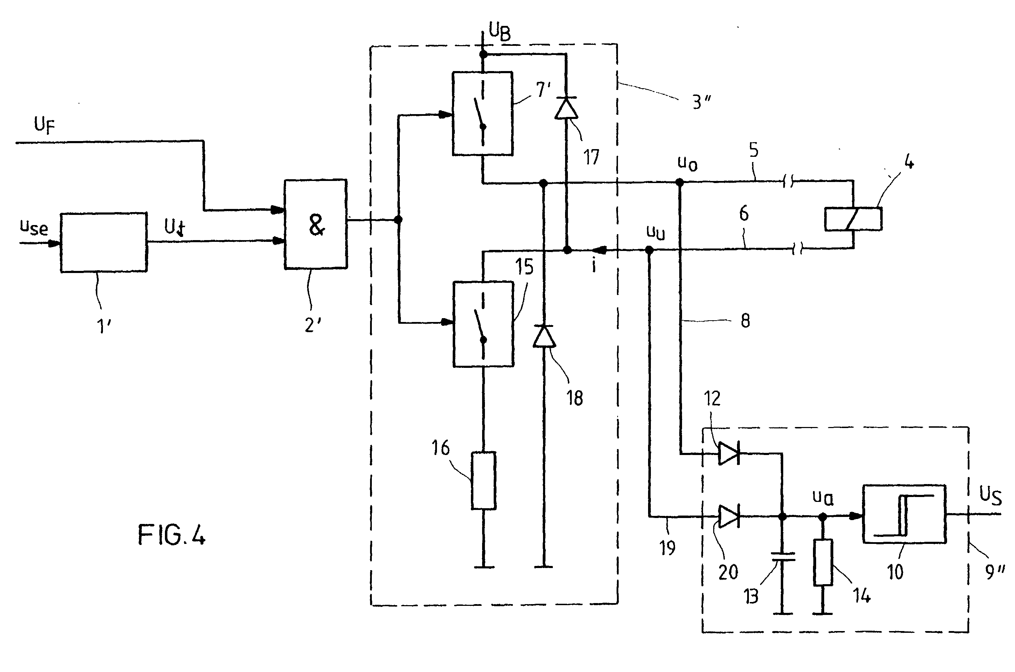

Die Figur 4 zeigt das Schaltbild eines erfindungsgemäßen Stellantriebes mit zwei getaktet arbeitenden Stellgliedern im Leistungsteil. Dieser Stellantrieb baut auf dem in der Figur 2 dargestellten Stellantrieb auf. Gleiche Bauteile sind mit den gleichen Bezugszeichen versehen. Das Leistungsteil 3" enthält zusätzlich zu dem Stellglied 7' ein weiteres Stellglied 15. Bei dem Stellglied 15 handelt es sich wie bei dem Stellglied 7' um einen elektronischen Schalter, z. B. einen MOS-Feldeffekttransistor. Die Stellglieder 7' und 15 werden wirkungsmäßig von dem Ausgangssignal der Verknüpfungsschaltung 2' angesteuert. Bei leitenden Stellgliedern 7' und 15 fließt von der Betriebsspannung U_{B} über das Stellglied 7', die Leitung 5, die Magnetspule 4, die Leitung 6, das Stellglied 15 und einen Meßwiderstand 16 der Strom i zum Bezugspotential. Die an dem Meßwiderstand 16 abfallende Spannung ist ein Maß für den in der Flußphase über die Magnetspule 4 fließenden Strom. Er dient als Istwert für eine hier nicht dargestellte Regelung des über die Magnetspule 4 fließenden Stromes i. Der Widerstandswert des Meßwiderstandes 16 ist klein gegenüber dem Widerstandswert der Magnetspule 4. Ein derartiger Meßwiderstand kann in gleicher Weise auch in den in den Figuren 1 und 2 dargestellten Stellantrieben vorgesehen werden. Die Leitung 6 ist über eine Diode 17 mit der Betriebsspannung U_{B} verbunden. Die Leitung 5 ist über eine weitere Diode 18 mit dem Bezugspotential verbunden.

Die Leitung 5 ist über die Leitung 8 mit einem ersten Eingang einer Auswertungsschaltung 9" verbunden. Die Leitung 6 ist über eine Leitung 19 mit einem zweiten Eingang der Auswertungsschaltung 9" verbunden. Die Auswertungsschaltung 9" enthält wie die Auswertungsschaltungen 9 und 9' einen Schwellenwertschalter 10. Die Spannung uₒ auf der Leitung 5 ist dem Schwellenwertschalter 10 über die Diode 12 zugeführt. Zusätzlich ist dem Schwellenwertschalter 10 die Spannung uᵤ auf der Leitung 6 über eine Diode 20 zugeführt. Die Dioden 12 und 20 entkoppeln die dem Eingang des Schwellenwertschalters 10 zugeführte Spannung uₐ von den Spannungen uₒ und uᵤ. Dem Eingang des Schwellenwertschalters 10 ist jeweils die höhere der Spannungen uₒ oder uᵤ zugeführt. Wie bereits oben beschrieben, nimmt das Schaltsignal U_{S} den logischen Wert "1" an, wenn die Spannung uₐ größer als die Schwellenspannung Uₐ₀ ist. Ist die Spannung uₐ kleiner als die Schwellenspannung Uₐ₀, nimmt das Schaltsignal U_{S} den logischen Wert "0" an.

In der Flußphase, d. h. bei leitenden Stellgliedern 7' und 15, fließt der Strom i von der Betriebsspannung U_{B} über das Stellglied 7', die Leitung 5, die Magnetspule 4, die Leitung 6, das Stellglied 15 und den Meßwiderstand 16 zum Bezugspotential. Die Spannung uₒ auf der Leitung 5 ist in dieser Phase praktisch gleich der Betriebsspannung U_{B}. Die Spannung uᵤ auf der Leitung 6 ist wegen des Spannungsabfalls an dem Meßwiderstand 16 geringfügig größer als das Bezugspotential. In der Sperrphase, d. h. bei nicht leitenden Stellgliedern 7' und 15, fließt der über die Magnetspule 4 fließende Strom i zunächst in gleicher Höhe weiter über die Diode 17 zur Betriebsspannung U_{B} und von dem Bezugspotential der Betriebsspannung U_{B} über die Diode 18 zu der Magnetspule 4 zurück. Der Strom i verringert sich dabei nach einer e-Funktion, deren Zeitkonstante im wesentlichen durch die Höhe der Spannungsdifferenz uₒ - uᵤ sowie durch die Induktivität der Magnetspule 4 und durch den ohmschen Widerstand der Magnetspule 4 bestimmt ist.

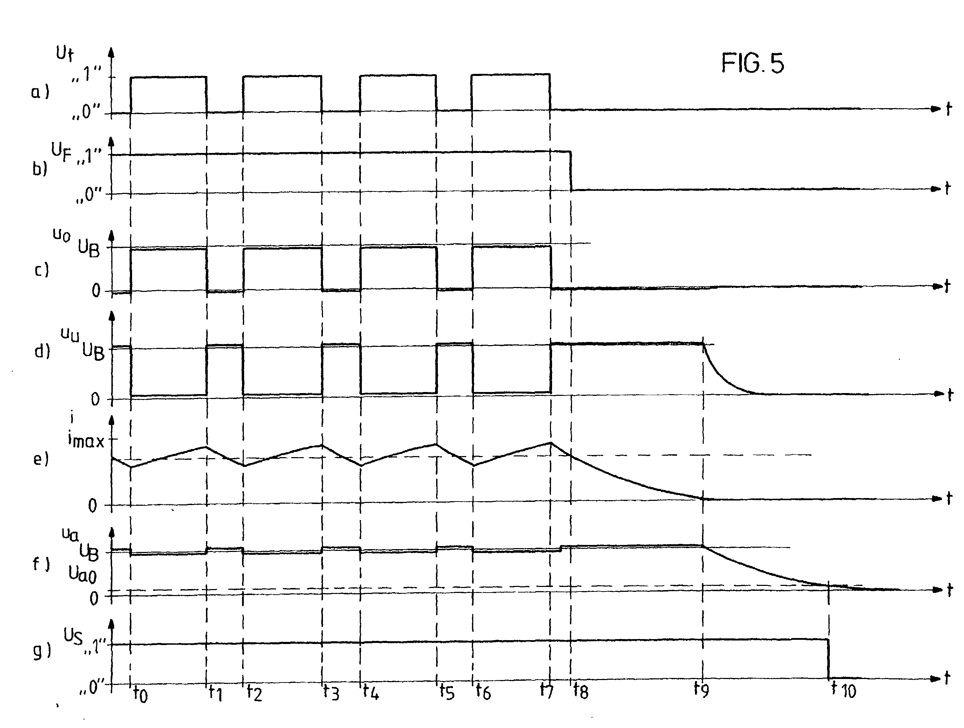

Die Figur 5 zeigt in mehreren untereinander angeordneten Diagrammen den zeitlichen Verlauf ausgewählter Signale des Stellantriebes gemäß der Figur 4. Dabei zeigt
- Figur 5a: das getaktete Signal Uₜ mit den logischen Werten "0" und "1",
- Figur 5b: das Freigabesignal U_{F} mit den logischen Werten "0" und "1",
- Figur 5c: die Spannung uₒ auf der Leitung 5 in dem Bereich zwischen null und der Betriebsspannung U_{B},
- Figur 5d: die Spannung uᵤ auf der Leitung 6 in dem Bereich zwischen null und der Betriebsspannung U_{B},
- Figur 5e: den über die Magnetspule 4 fließenden Strom i zwischen null und dem sich bei einem Tastverhältnis von 100 % einstellenden maximalen Strom iₘₐₓ,
- Figur 5f: die Spannung uₐ am Eingang des Schwellenwertschalters 10 zwischen null und der Betriebsspannung U_{B} sowie
- Figur 5g: das Schaltsignal U_{S} mit den logischen Werten "0" und "1".

Das Freigabesignal U_{F} (Figur 5b) weist bis zum Zeitpunkt t₈ den logischen Wert "1" auf. In diesem Zeitraum wird die Magnetspule 4 entsprechend dem getakteten Signal Uₜ (Figur 5a) mit der Betriebsspannung U_{B} beaufschlagt. Der zeitliche Verlauf der Spannung uₒ auf der Leitung 5 (Figur 5c) entspricht dabei dem zeitlichen Verlauf des getakteten Signals Uₜ. Der zeitliche Verlauf der Spannung uᵤ auf der Leitung 6 (Figur 5d) ist praktisch gegenüber dem zeitlichen Verlauf der Spannung uₒ invertiert. Der Strom i (Figur 5e) steigt jeweils in den Flußphasen, d. h. in den Zeiträumen t₀ bis t₁, t₂ bis t₃, t₄ bis t₅ und t₆ bis t₇, nach einer e-Funktion an. In den Sperrphasen, d. h. in den Zeiträumen t₁ bis t₂, t₃ bis t₄, t₅ bis t₆ sowie ab dem Zeitpunkt t₇, klingt der Strom i nach einer e-Funktion ab. Im Zeitpunkt t₉ ist der Strom i zu null geworden. Solange der Strom i noch fließt, also zwischen den Zeitpunkten t₇ und t₉, ist die Leitung 6 mit einer Spannung beaufschlagt, die um die Durchlaßspannung der Diode 17 größer als die Betriebsspannung U_{B} ist. Erst im Zeitpunkt t₉ verringert sich die Spannung uᵤ. Aufgrund von Streukapazitäten und Kriechströmen verringert sich die Spannung uᵤ nach einer Zeitfunktion. In den Flußphasen ist die dem Eingang des Schwellenwertschalters 10 zugeführte Spannung uₐ (Figur 5f) gleich der um die Durchlaßspannung der Diode 12 verminderten Spannung uₒ. In den Sperrphasen ist die dem Eingang des Schwellenwertschalters 10 zugeführte Spannung uₐ (Figur 5f) gleich der um die Durchlaßspannung der Diode 20 verminderten Spannung uᵤ. Aufgrund der Durchlaßspannung der Diode 17 ist die Spannung uₐ in den Sperrphasen geringfügig größer als in den Flußphasen. Die Spannung uₐ ist aber sowohl in den Flußphasen als auch in den Sperrphasen größer als die Schwellenspannung Uₐ₀, so daß das Schaltsignal U_{S} den logischen Wert "1" beibehält. Mit dem Abklingen der Spannung uᵤ nach dem Zeitpunkt t₉ entlädt sich der Kondensator 13 über den Widerstand 14 nach einer e-Funktion. Da die Spannung uₐ von der Spannung uᵤ durch die Diode 20 entkoppelt ist, kann die Spannung uₐ langsamer abklingen als die Spannung uᵤ. Die Zeitkonstante der e-Funktion, mit der die Spannung uₐ abklingt, ist durch das Produkt aus dem Widerstandswert des Widerstandes 14 und der Kapazität des Kondensators 13 bestimmt. Sie dient hauptsächlich zum Unterdrücken von Störungen. Sie kann kleiner gewählt werden als die entsprechende Zeitkonstante der Figur 2, da die Entladung des Kondensators 13 erst dann stattfindet, wenn der Strom i bereits zu null geworden ist. Die Spannung uₐ unterschreitet die Schwellenspannung Uₐ₀ im Zeitpunkt t₁₀ nachdem der Strom i im Zeitpunkt t₉ zu null geworden ist. Im Zeitpunkt t₁₀ ändert sich das Schaltsignal U_{S} (Figur 5g) von dem logischen Wert "1" zu dem logischen Wert "0".

Bei ordnungsgemäßer Funktion des Stellantriebes ändert sich bei dem in der Figur 4 dargestellten Stellantrieb der logische Wert des Schaltsignals U_{S} von "1" nach "0", nachdem das Freigabesignal U_{F} von "1" nach "0" gewechselt hat. Der Wechsel des Schaltsignals U_{S} von "1" nach "0" folgt dem Wechsel des Freigabesignals U_{F} von "1" nach "0" mit einer durch den Zeitraum t₁₀ - t₈ bestimmten Verzögerung. Solange ein derartiger Wechsel erfolgt, ist die Verknüpfung des getakteten Signals Uₜ mit dem Freigabesignal U_{F} durch die Verknüpfungsschaltung 2' wirksam. Behält das Schaltsignal U_{S} dagegen den logischen Wert "1" bei, wenn das Freigabesignal U_{F} von "1" auf "0" gewechselt hat, liegt eine Störung vor. Da das Schaltsignal U_{S} nur dann den logischen Wert "1" annimmt, wenn die Spannung uₐ größer als die Schwellenspannung Uₐ₀ ist, läßt sich schließen, daß die Spannung uₒ auf der Leitung 5 oder die Spannung uᵤ auf der Leitung 6 größer als das Bezugspotential ist. Dies bedeutet, daß eine Störung aufgetreten sein muß, da im störungsfreien Betrieb und bei fehlendem Freigabesignal U_{F} die Spannungen uₒ und uᵤ auf den Leitungen 5 bzw. 6 über die Dioden 12 bzw. 20 sowie den Widerstand 14 praktisch auf Bezugspotential abgeklungen sind. Bei einer derartigen Störung kann es sich um einen Kurzschluß zwischen der Betriebsspannung U_{B} und der Leitung 5 handeln. Hierzu gehört auch ein Kurzschluß des Stellgliedes 7' nach einer Überlastung. Auch bei einem Kurzschluß zwischen dem Eingang und dem Ausgang der Verknüpfungsschaltung 2' kann eine derartige Störung auftreten. Die vorstehend in allgemeiner Form beschriebene Auswertung des Schaltsignals U_{S} in Abhängigkeit von dem Freigabesignal U_{F} läßt sich durch in entsprechender Weise miteinander verbundene logische Verknüpfungsglieder automatisieren, so daß im Störungsfall entweder eine Abschaltung erfolgt oder zunächst nur eine Störungssignalisierung.

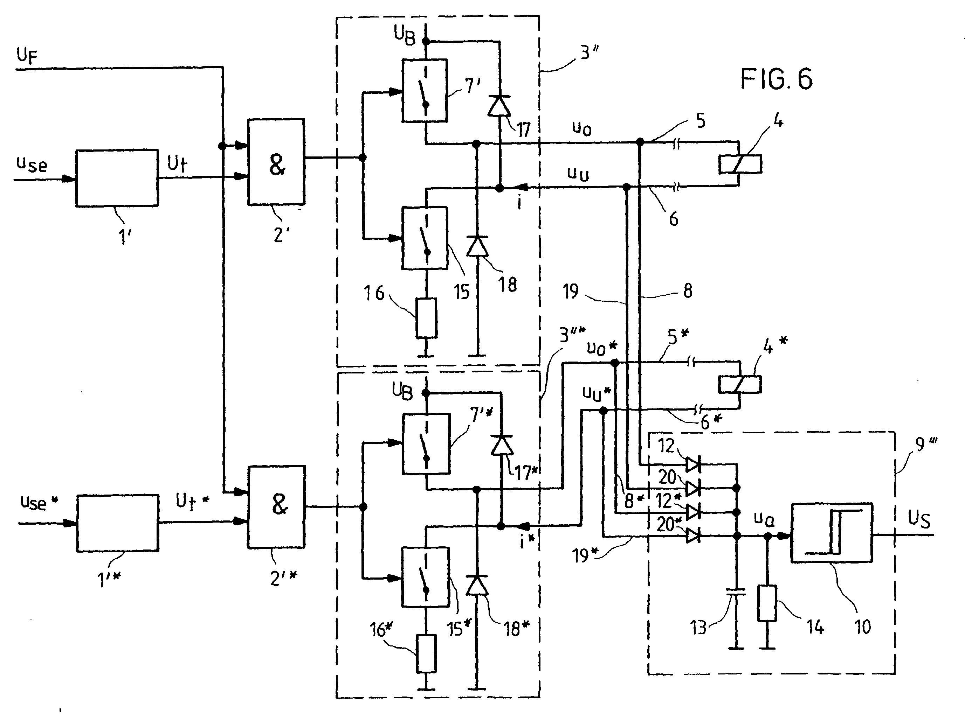

Die Figur 6 zeigt das Schaltbild von zwei Stellantrieben gemäß der Erfindung. Zusätzlich zu dem in der Figur 4 dargestellten Stellantrieb ist ein weiterer gleichartig aufgebauter Stellantrieb vorgesehen. Die Bezugszeichen der Bauteile des zusätzlichen Stellantriebes sind zur Unterscheidung von den entsprechenden Bauteilen des in der Figur 4 dargestellten Stellantriebes zusätzlich mit einem "*" versehen. Den Verknüpfungsschaltungen 2' und 2'* ist dasselbe Freigabesignal U_{F} zugeführt. Bei ordnungsgemäßen Betrieb kann nur dann Strom über die Magnetspulen 4 oder 4* fließen, wenn das Freigabesignal U_{F} vorhanden ist. Anstelle von zwei getrennten Auswertungsschaltungen ist für beide Stellantriebe eine gemeinsame Auswertungsschaltung 9'" vorgesehen. Die Leitung 5* ist über eine Leitung 8* und eine Diode 12* mit dem Eingang des Schwellenwertschalters 10 verbunden. Die Leitung 6* ist über eine Leitung 19* und eine Diode 20* mit dem Eingang des Schwellenwertschalters 10 verbunden. Dem Eingang des Schwellenwertschalters 10 ist somit jeweils die größte der Spannungen auf den Leitungen 5, 6, 5* und 6* als Spannung uₐ zugeführt. Nur wenn die Spannung uₐ kleiner ist als die Schwellenspannung Uₐ₀, wechselt'das Schaltsignal U_{S} von dem logischen Wert "1" nach dem logischen Wert "0". Der logische Wert "0" des Schaltsignals U_{S} stellt sicher, daß die Spannungen auf den Leitungen 5, 6, 5* und 6* praktisch auf Bezugspotential liegen. Wenn diese Bedingung nach einem Wechsel des Freigabesignals U_{F} von dem logischen Wert "1" nach dem logischen Wert "0" erfüllt ist, kann von einem störungsfreien Betrieb ausgegangen werden.

In der Figur 6 sind sowohl die Spannungen uₒ und u_{o^{*}} als auch die Spannungen uᵤ und u_{u*} der Auswertungsschaltung 9'" zugeführt. Es ist jedoch auch möglich, entsprechend dem in der Figur 2 dargestellten Stellantrieb, der Auswertungsschaltung nur die Spannungen uₒ und u_{o*} zuzuführen.

## Patentansprüche

1. Elektromagnetischer Stellantrieb mit einer Steuerschaltung (1;1'), einer Verknüpfungsschaltung (2;2') und einem Leistungsteil (3;3') sowie mit einer Magnetspule (4), die über elektrische Leitungen (5,6) mit dem Ausgang des Leistungsteils verbunden ist, bei welchem Stellantrieb die Verknüpfungsschaltung das Ausgangssignal (Uₛₐ,Uₜ) der Steuerschaltung nur dann an das Leistungsteil weiterleitet, wenn der Verknüpfungsschaltung zusätzlich zu dem Ausgangssignal der Steuerschaltung ein Freigabesignal (U_{F}) zugeführt ist, und bei welchem das Leistungsteil entsprechend dem von der Verknüpfungsschaltung weitergeleiteten Ausgangssignal der Steuerschaltung einen Stromfluß von einer Betriebsspannung (U_{B}) über mindestens ein Stellglied (7;7') und die Magnetspule zu einem Bezugspotential (⊥) bewirkt, insbesondere für hydraulische oder pneumatische Proportionalventile, **dadurch gekennzeichnet, daß** die Spannung (uₒ) derjenigen Leitung (5), die bei Ansteuerung des Leistungsteils (3; 3') über das Stellglied (7; 7') mit der Betriebsspannung (U_{B}) beaufschlagt ist, einer Auswertungsschaltung (9;9';9";9"') zugeführt ist und daß die Auswertungsschaltung einen Schwellenwertschalter (10) aufweist, der die ihm zugeführte Spannung (uₐ) in ein Schaltsignal (U_{S}) umwandelt, wobei die Schwellenspannung (Uₐ₀) des Schwellenwertschalters (10) geringfügig größer als das Bezugspotential (⊥) ist.

2. Stellantrieb nach Anspruch 1, **dadurch gekennzeichnet, daß** zwischen dem Eingang der Auswertungsschaltung (9') und dem Eingang des Schwellenwertschalters (10) eine Diode (12) angeordnet ist und daß zwischen dem Eingang des Schwellenwertschalters (10) und dem Bezugspotential (⊥) die Parallelschaltung eines Kondensators (13) und eines Widerstandes (14) angeordnet ist.

3. Stellantrieb nach Anspruch 2, **dadurch gekennzeichnet, daß** das Produkt aus dem Widerstandswert des Widerstandes (14) und der Kapazität des Kondensators (13) größer als die Zeitkonstante ist, mit der der über die Magnetspule (4) fließende Strom (i) bei nicht leitendem Stellglied (7') abklingt.

4. Stellantrieb nach Anspruch 2, **dadurch gekennzeichnet, daß** die Spannung (uᵤ) der anderen von dem Leistungsteil (3") zu der Magnetspule (4) führenden Leitung (6) einem zweiten Eingang der Auswertungsschaltung (9") zugeführt ist und daß zwischen dem zweiten Eingang der Auswertungsschaltung (9") und dem Eingang des Schwellenwertschalters (10) eine zweite Diode (20) angeordnet ist.

5. Stellantrieb nach Anspruch 3 oder Anspruch 4, **dadurch gekennzeichnet, daß** der Widerstandswert des Widerstandes (14) mindestens zwei Größenordnungen größer als der ohmsche Widerstand der Magnetspule (4) ist.

6. Stellantrieb nach einem der Ansprüche 2 bis 5, **dadurch gekennzeichnet, daß** für mehr als einen Stellantrieb, bei denen jeweils eine Magnetspule (4, 4*) über zwei Leitungen (5, 6 bzw. 5*, 6*) mit je einem Leistungsteil (3", 3"*) verbunden ist, eine gemeinsame Auswertungsschaltung (9'") mit einem Schwellenwertschalter (10) vorgesehen ist und daß die von den Leistungsteilen (3", 3"*) zu den Magnetspulen (4, 4*) führenden Leitungen (5, 6, 5*, 6*), mindestens jedoch die Leitungen (5, 5*), über die die Magnetspulen (4, 4*) bei Ansteuerung des jeweiligen Leistungsteils (3" bzw. 3"*) mit der Betriebsspannung (U_{B}) beaufschlagt sind, über je eine Diode (12, 20, 12*, 20*) mit dem Eingang des Schwellenwertschalters (10) verbunden sind.

## Claims

1. An electromagnetic actuator drive with a control circuit (1; 1'), a logic circuit (2; 2') and a power section (3; 3'), as well as a solenoid coil (4) connected by means of electric lines (5, 6) with the output of the power section, in which actuator drive the logic circuit only then transmits the output signal (U_{Sa}, Uₜ) of the control circuit to the power section when, in addition to the output signal of the control circuit, an enabling signal (U_{F}) is fed to the logic circuit, and in which the power section, as a function of the output signal of the control circuit transmitted by the logic circuit, causes a current to flow from an operating voltage source (U_{B}) through at least one actuator (7; 7') and the solenoid coil to a reference potential (⊥), in particular for hydraulic or pneumatic proportional control valves, **characterized in that** the voltage (u₀) of that line (5) which is subjected to the operating voltage (U_{B}) upon piloting of the power section (3; 3') via the actuator (7; 7') is fed to an evaluation circuit (9; 9', 9"; 9" ') and that the evaluation circuit comprises a threshold trigger (10) which converts the voltage (uₐ) fed to it into a switching signal (U_{S}), whereby the threshold voltage (uₐ₀) of the threshold trigger (10) is slightly greater than the reference potential (⊥).

2. An actuator drive according to Claim 1, **characterized in that** between the input of the evaluation circuit (9') and the input of the threshold trigger (10) is arranged a diode (12) and that between the input of the threshold trigger (10)and the reference potential (⊥) is arranged the parallel connection of a capacitor (13) and a resistor (14).

3. An actuator drive according to Claim 2, **characterized in that** the product of the resistance of the resistor (14) and the capacity of the capacitor (13) is greater than the time constant with which the current (i) flowing through the solenoid coil (4) decays when the actuator (7') is non-conducting.

4. An actuator drive according to Claim 2, **characterized in that** the voltage (uᵤ) of the other line (6) leading from the power section (3") to the solenoid coil (4) is fed to a second input of the evaluation circuit (9") and that between the second input of the evaluation circuit (9") and the input of the threshold trigger (10) is arranged a second diode (20).

5. An actuator drive according to Claim 3 or Claim 4, **characterized in that** the resistance of the resistor (14) is at least two orders of magnitude greater than the ohmic resistance of the solenoid coil (4).

6. An actuator drive according to any of Claims 2 to 5, **characterized in that** for more than one actuator drive, in each of which a solenoid coil (4,4*) is connected via two lines (5, 6 or 5*, 6*) with a power section (3", 3"*) in each case, a common evaluation circuit (9'") with a threshold trigger (10) is provided and that the lines (5, 6, 5*, 6*), however, at least the lines (5, 5*), leading from the power sections (3", 3"*) to the solenoid coils (4, 4*), through which the solenoid coils (4, 4*) are subjected to the operating voltage (U_{B}) upon piloting of the respective power section (3" or 3"*) are connected by means of one diode each (12, 20, 12*, 20*) with the input of the threshold trigger (10).

## Revendications

1. Un organe de commande électromagnétique, doté d'un branchement (1 ; 1') de commande, d'un branchement (2 ; 2') de combinaison et d'une partie puissance (3 ; 3'), ainsi que d'une bobine (4) de solénoïde raccordée à la sortie de la partie puissance par des câbles (5, 6) électriques, organe de commande pour lequel le branchement de combinaison ne transmet le signal (U_{Sa}, Uₜ) de sortie du branchement de commande vers la partie puissance que si le branchement de combinaison reçoit, en plus du signal de sortie du branchement de commande, un signal (U_{F}) de libération et pour lequel, en fonction du signal de sortie du branchement de commande transmis par le branchement de combinaison, la partie puissance produit un flux de courant d'une tension (U_{B}) de travail, qui agit sur au moins un élément (7 ; 7') de commande et sur la bobine de solénoïde par rapport à un potentiel (⊥) de référence, en particulier pour des valves hydrauliques ou pneumatiques à action proportionnelle,
**caractérisé en ce que** la tension (u₀) de celui des câbles (5), qui est soumis à la tension (U_{B}) de travail lorsque la partie puissance (3 ; 3') est commandée par l'élément (7 ; 7') de commande, est ramenée vers un branchement (9 ; 9'; 9" ; 9"') d'évaluation et que le branchement d'évaluation présente un commutateur (10) de valeur de seuil, qui transforme la tension (Uₐ) lui étant ramenée en un signal (U_{S}) de commutation, cependant que la tension (Uₐ₀) de valeur de seuil du commutateur (10) de valeur de seuil est légèrement supérieure au potentiel (⊥) de référence.

2. Un organe de commande conforme à la revendication n° 1, **caractérisé en ce que** une diode (12) est disposée entre l'entrée du branchement (9') d'évaluation et l'entrée du commutateur (10) de valeur de seuil et que le branchement en parallèle d'un condensateur (13) et d'une résistance (14) est disposé entre l'entrée du commutateur (10) de valeur de seuil et le potentiel (⊥) de référence.

3. Un organe de commande conforme à la revendication n°2, **caractérisé en ce que** le produit de la valeur de résistance de la résistance (14) et de la capacité du condensateur (13) est supérieur à la constante de temps, avec laquelle décline le courant (i) passant par la bobine (4) de solénoïde, lorsque l'élément (7') de commande est non conducteur.

4. Un organe de commande conforme à la revendication n° 2, **caractérisé en ce que** la tension (uᵤ) de l'autre câble (6), qui mène de la partie(3") puissance vers la bobine (4) de solénoïde, est ramenée vers une seconde entrée du branchement (9") d'évaluation et qu'une seconde diode (20) est disposée entre la seconde entrée du branchement (9") d'évaluation et l'entrée du commutateur (10) de valeur de seuil.

5. Un organe de commande conforme à la revendication n° 3 ou la revendication n° 4, **caractérisé en ce que** la valeur de résistance de la résistance (14) est, de deux ordres de grandeur, supérieure à la résistance ohmique de la bobine (4) de solénoïde.

6. Un organe de commande conforme à une des revendications n° 2 à n° 5, **caractérisé en ce que** un branchement (9"') d'évaluation commun, doté d'un commutateur (10) de valeur de seuil, est prévu lorsqu'il y a plus d'un organe de commande et que les organes de commande présentent chacun une bobine (4, 4*) de solénoïde, raccordée par deux câbles (5, 6 ou, le cas échéant, 5*, 6*) à une partie (3", 3"*) puissance chacun, et que les câbles (5, 6, 5*, 6*), du moins pour ce qui est des câbles (5, 5*), menant des parties (3", 3"*) puissance vers les bobines (4, 4*) de solénoïde, au moyen desquels les bobines (4, 4*) de solénoïde sont soumis à la tension (U_{B}) lors de la sollicitation de la partie (3" ou, le cas échéant, 3"*) puissance correspondante, sont raccordés à l'entrée du commutateur (10) de valeur de seuil au travers d'une diode (12, 20, 12*, 20*) chacun.
